# EUROPEAN PATENT APPLICATION

(11) **EP 4 203 499 A2**
(43) Date of publication of application: **28.06.2023**
(21) Application number: 22216048.3
(22) Date of filing: 22.12.2022
(51) Int. Cl.: H04R 1/10, H04R 25/00

(54) **CHARGER DEVICE FOR HEARING DEVICES**

(30) Priority: 23.12.2021 EP 21217634
(71) Applicant: Oticon A/S, 2765 Smørum (DK)
(72) Inventor: KLEMMENSEN, Bjarne, DK-2765 Smørum (DK); HENRIKSEN, Poul, 3670 Veksø (DK); NIELSEN, Mikkel Finmand Kjær, DK-2765 Smørum (DK); PRIESUM, Kristian Weber, DK-2765 Smørum (DK); CHRISTENSEN, Rasmus Lundgaard, DK-2765 Smørum (DK); ROBERTSON, Andreas, DK-2765 Smørum (DK)
(74) Representative: Demant

(57) **Abstract**

The present disclosure relates to charger devices configured to (re)charge hearing devices, such as hearing aids, hearables, earphones etc. The charger device provides charge wirelessly and/or wired to one or more hearing devices. The charger device as disclosed herein may exhibit one or more features so as to arrange a hearing device relative to the charger in order to charge the hearing device.

## Description

The present disclosure relates to a charger device configured to charge one or more hearing devices. More particularly, the disclosure relates to a charger device for wireless or wired charging of hearing devices, such as a single hearing device or a set of hearing device. The hearing device may be a hearing aid or an earbud/hearable or the like ear level device.

### BACKGROUND

When charging a device configured to be positioned at an ear of a user, such as a hearing aid or a hearing device or an earbud, either via a wire or wirelessly, there is a need for having a place to locate the device, such as an earbud, such as a hearing aid, such as set of hearing aids, while charging. This may be achieved in a charger device as disclosed herein.

Further, when charging small devices such as hearing devices, hearing aids, earbuds, uses would benefit from receiving some kind of feedback that the device or devices are positioned correctly, i.e. the device or set of devices are in a position where they can receive power to charge/recharge an energy storage in the housing of such a device. This could be wirelessly or wired charging as mentioned above.

Hearing aids generally is available in a range of different styles, often termed Behind-the-ear, Receiver-in-the-ear, In-the-ear. All these have different form factors, and even different sizes within the same style. This could lead to the need for specifically shaped charger/storage devices, however, providing a specialized/customized charger for a specific hearing deice/hearing aid could be expensive and/or cumbersome.

Earbuds are generally shaped to be at least partially located in the ear canal of a user/wearer with a part being shaped/formed to face the environment of the user. When a user places a device in a charger in order to charge it, the user could accidentally place the device wrongly so that the device does not receive any charge.

Therefore, there is a need to provide a solution that addresses at least some of the above-mentioned problems. The present disclosure provides at least an alternative to the prior art.

### SUMMARY

The present disclosure related to a charger device for (re)charging a hearing device. The charger device may be powered by a mains connection. The charger device may comprise a battery configured to provide charge power to the hearing device when no mains connection is present or available, such as while the user is travelling or the like. The internal battery may then be charged when the charger is connected to an external power supply, such as a mains power supply. The mains power may be provided from e.g. a 12/24V car supply or a 110/220 V wall socket or the like, or a 5V USB connection to a computer or suitable power supply. The charger device may comprise one or more visual indicators, such as LED lights and/or a graphic display. The visual indicators may be used to communicate information such as "device present", "device being charged", "device partial charge status", "device fully charged". The charger device may comprise a data interface configured to communicate with a server device for providing e.g. software/setting update to the hearing device, such as firmware updates etc. or may be configured to collect data from a hearing device, such as use data, status data, crash data etc. Such collected data may e.g. be stored in the charger device until the device is examined/read at a hearing health care professional or service personnel, or, may be communicated from the charger device via a communications interface either directly via e.g. WIFI or via a connection though a smartphone, to e.g. a server or the like. In such cases, the charger device may include a wireless interface, such as WiFi and/or Bluetooth or another suitable communication interface.

According to an aspect, the present disclosure relates to a charger device configured to charge and receive hearing devices having different geometries. This could be achieved by a charging device configured to receive a hearing device as disclosed herein. Such a charging device may comprise a housing having a reception area configured to receive a hearing device such as a hearing aid. The reception area could be open upward so that the hearing device to be charged may be placed therein by a user in an easy manner. The charging device may comprise a charge supply configured to provide a charge current to the hearing device. The charge current may be provides via charge points, sometimes referred to as contact charging, or, via a wireless transfer, often known as wireless charging. A combination of contacts and wireless charging may also be provided. In a charger as disclosed herein, the reception area may comprise a first retention area configured to engage with a first part of the hearing aid which then guide the hearing device to have a specific orientation relative to the reception area. In this way, the hearing device is guided into a position where charging may be more optimal, e.g. during wireless charging so that a reception antenna in the hearing device received sufficient power from a transmitting antenna in the charging device, and, in case of contact charging, charge reception points in the hearing device may be brought into contact with corresponding contacts in the charging device. In this way, the reception area may actually be shaped so that a multitude of difference geometries of hearing devices may be allowed to be received and placed in the reception area and properly charged. This could e.g. be two different types of hearing devices having differently sized and/or shaped housings which both could be charged in the same charging device.

The charger device could comprise one or more openings which could receive moisture or water droplets from the device being charged. It is also a possibility, or risk, that sweat and/or earwax/cerumen is being discharged from the device being charged. This cerumen/wax and/or sweat may flow more easily from the device being charged during charging, as the charging process may increase the temperature of the device being charged and/or the charger device. One or more channels may be formed underneath such an opening to guide the collected waste material away from components underneath the opening, such as from underneath the reception area.

The first retention area may comprise a protrusion and/or a groove configured to mechanically engage said first part of the hearing aid. This could allow the first retention area to be shaped to accommodate a variety of hearing device housing shapes and/or sizes while ensuring that the device is held in a certain orientation relative to a charging area/connection.

A charger device as disclosed herein may further comprise a magnet arranged at the reception area which may then be configured to provide a magnetic field that intercept a magnetizable component in said hearing aid. This arrangement could help align a hearing device relative to charge current dispensing, i.e. charge dispensed via wireless charging or point charging. More than one magnet may be used for this purpose in the charger device. Further, the magnet, or at least one of the magnets, may be or include a coil and a nonmagnetic material configured to create a magnetic field, either while the charger device is powered, or following an instruction from a user, such as a button being pressed or operated or instructions from an app on a smartphone activating the charger device.

The first part of the hearing aid may advantageously be at least one of: a sound hook, a wire, a tube. The first part is on other words preferably something, or some part, that extends from the housing in a way that it is possible for a part of the charger to engage with this first part and guide the hearing device to a correct, or close to optimal, arrangement relative to the charge area. These parts of the hearing device may be a more constant feature across a range of devices of different styles and/or sizes.

The charge supply may be provided to the hearing aid as a wireless charge signal, and the charger may then comprise at least one coil arranged at said reception area. The number and shape of such coil or coils may depend on the desired field strength and/or desired field distribution at the reception area.

The coil or coils may be arranged in a cylindrical or helical shape, and at least part of the reception area may be arranged in a volume inside the cylinder or helix. This could be advantageous for establishing a charging area or volume for devices not having a fixed outer shape, such as custom shaped housing for hearing aids. Alternatively, or additionally, this could provide a charging field distribution suitable for charging multiple devices at once.

The reception area may comprise a bowl-shaped section. This could allow the user to simply dump the hearing device into the bowl-shaped section when wishing to charge the hearing device without having to consider the orientation of the device. A bowl-shaped section further provides a geometric minimum to which an object would seek to rest at.

If a charger device' upper surface is rounded in a bowl-shaped manner, where the center is lower than the surrounding edge, a device placed on/in the charger will, due to gravity, slide towards the center of the charging bowl area and therefore, by itself, be centered if placed outside the optimum central area by the user. This is particular advantageous when charging small devices where a big planar coil may not be practical, it could be relevant to place the device in an area with a predictable charger field properties, such as near the middle of a charge coil.

The charger device may be configured to determine that the hearing device is in a position to be charged, and that the charger device comprises an output transducer configured to provide haptic feedback upon determination that the hearing device is in the position to be charged. This could be useful for persons having low dexterity and/or impaired vision as hearing devices may be relatively small and light. The detection may be achieved by a further device, such as an optical sensor, a capacitive sensor, a contact detector arranged in relation to a contact charge pin.

By providing the users with haptic feedback upon correct insertion, the status of the hearing device may be much better communicated. The hearing device charger may already be able to detect insertion/presence of a hearing device, so by implementing e.g. a shaftless vibration motor used for sending haptic feedback to the user when a hearing device is detected, the solution is complete. The solution is a great improvement in terms of usability, user experience and inclusive design principles. The status of the hearing device is more clearly communicated to a user having visual and/or hearing impairment, by adding additional sensorial stimuli to the user, which can help better the experience for people with impaired vision, or in challenging environments. The haptic feed back may be combined with both visual and/or sound feedback that a hearing device is placed in a charger device correctly. There may even be implemented feedback information to the user that a hearing device is placed in the reception area but have not yet, e.g. within a specified period of time, reached a position where it may be charged. This could e.g. be a warning sound/vibration/light, in combination or individual, to the user that the hearing device is detected as being within a given area of the charger device but not being charged yet. Such a warning could e.g. be given 5 second after detecting presence of a hearing device but within charging power being supplied yet.

According to a second aspect, the present disclosure relates to a charger device configured to receive at least one hearing device, wherein the hearing device may be configured to be placed at the ear of a user. The charger device may then be configured to determine that the at least one hearing device have been positioned in the charger so that it is able to receive power to charge a battery device in the hearing device. This could be achieved by a determination that the hearing device is in a position where it receives power above a certain charging threshold. It could alternatively be achieved by a determination that the hearing device have reached a certain position within a cavity of the charger device.

The charger device may include a sensor configured to detect that a hearing device is positioned in/at the charger. The sensor may be configured to provide a signal to a processor configured to perform the determination of the position of the hearing device, e.g. whether a hearing device is in contact with a charge area or pad or not.

The charger device may be configured to provide haptic feedback to the user that a hearing device is in a position to receive power to charge the hearing device. This would help the user to determine if she/she have placed the hearing device correctly and thus lower the risk of the hearing device not receiving power. The haptic feedback could be vibration,

According to an aspect, the present disclosure provides a charger having a reception area configured to receive one or more hearing devices to be wirelessly charged via the charger. The reception area could include at least one geometrical minimum, where the hearing device would naturally search towards when positioned in the reception area. Such a minimum could be established by having a bowl-shaped geometry for receiving one or more hearing devices. When whishing to create a charger configured to charge e.g. a set of two hearing devices, a bowl-shaped charger having two minima could be provided, such as a geometry with two depressions, each configured to receive a hearing device. In this was an easy-to-use charger could be provided to a user having two hearing devices to be charged wirelessly. The minima could provide a natural sliding motion which align the hearing device with a corresponding charger coil arranged beneath, or around/at, the minimum/depression.

Features from the above aspects may be combined individually or in full.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIG. 1 schematically illustrates a hearing device,
FIG. 2 schematically illustrates a charger device,
FIG. 3 schematically illustrates charger coils of a charger device,
FIG. 4 schematically illustrates a bowl for a charger device,
FIG. 5 schematically illustrates a charger device having a bowl with a charger coil, and
FIG. 6 schematically illustrates a charger device having a bowl and two charger coils.

### DETAILED DESCRIPTION

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

A hearing device (or hearing instrument, hearing assistance device) may be or include a hearing aid that is adapted to improve or augment the hearing capability of a user by receiving an acoustic signal from a user's surroundings, generating a corresponding audio signal, possibly modifying the audio signal and providing the possibly modified audio signal as an audible signal to at least one of the user's ears. 'Improving or augmenting the hearing capability of a user' may include compensating for an individual user's specific hearing loss. The "hearing device" may further refer to a device such as a hearable, an earphone or a headset adapted to receive an audio signal electronically, possibly modifying the audio signal and providing the possibly modified audio signals as an audible signal to at least one of the user's ears. Such audible signals may be provided in the form of an acoustic signal radiated into the user's outer ear, or an acoustic signal transferred as mechanical vibrations to the user's inner ears through bone structure of the user's head and/or through parts of the middle ear of the user or electric signals transferred directly or indirectly to the cochlear nerve and/or to the auditory cortex of the user.

The hearing device may be adapted to be worn in any known way. This may include i) arranging a unit of the hearing device behind the ear with a tube leading air-borne acoustic signals into the ear canal or with a receiver/ loudspeaker arranged close to or in the ear canal and connected by conductive wires (or wirelessly) to the unit behind the ear, such as in a Behind-the-Ear type hearing aid, and/ or ii) arranging the hearing device entirely or partly in the pinna and/ or in the ear canal of the user such as in an In-the-Ear type hearing aid or In-the-Canal/ Completely-in-Canal type hearing aid, or iii) arranging a unit of the hearing device attached to a fixture implanted into the skull bone such as in a Bone Anchored Hearing Aid or a Cochlear Implant, or iv) arranging a unit of the hearing device as an entirely or partly implanted unit such as in a Bone Anchored Hearing Aid or a Cochlear Implant. The hearing device may be implemented in one single unit (housing) or in a number of units individually connected to each other.

A "hearing system" refers to a system comprising one or two hearing devices, and a "binaural hearing system" refers to a system comprising two hearing devices where the devices are adapted to cooperatively provide audible signals to both of the user's ears. The hearing system or binaural hearing system may further include one or more auxiliary device(s) that communicates with at least one hearing device, the auxiliary device affecting the operation of the hearing devices and/or benefitting from the functioning of the hearing devices. A wired or wireless communication link between the at least one hearing device and the auxiliary device is established that allows for exchanging information (e.g. control and status signals, possibly audio signals) between the at least one hearing device and the auxiliary device. Such auxiliary devices may include at least one of a remote control, a remote microphone, an audio gateway device, a wireless communication device, e.g. a mobile phone (such as a smartphone) or a tablet or another device, e.g. comprising a graphical interface, a public-address system, a car audio system or a music player, or a combination thereof. The audio gateway may be adapted to receive a multitude of audio signals such as from an entertainment device like a TV or a music player, a telephone apparatus like a mobile telephone or a computer, e.g. a PC. The auxiliary device may further be adapted to (e.g. allow a user to) select and/or combine an appropriate one of the received audio signals (or combination of signals) for transmission to the at least one hearing device. The remote control is adapted to control functionality and/or operation of the at least one hearing device. The function of the remote control may be implemented in a smartphone or other (e.g. portable) electronic device, the smartphone / electronic device possibly running an application (APP) that controls functionality of the at least one hearing device.

In general, a hearing device includes i) an input unit such as a microphone for receiving an acoustic signal from a user's surroundings and providing a corresponding input audio signal, and/or ii) a receiving unit for electronically receiving an input audio signal. The hearing device further includes a signal processing unit for processing the input audio signal and an output unit for providing an audible signal to the user in dependence on the processed audio signal.

The input unit may include multiple input microphones, e.g. for providing direction-dependent audio signal processing. Such directional microphone system is adapted to (relatively) enhance a target acoustic source among a multitude of acoustic sources in the user's environment and/or to attenuate other sources (e.g. noise). In one aspect, the directional system is adapted to detect (such as adaptively detect) from which direction a particular part of the microphone signal originates. This may be achieved by using conventionally known methods. The signal processing unit may include an amplifier that is adapted to apply a frequency dependent gain to the input audio signal. The signal processing unit may further be adapted to provide other relevant functionality such as compression, noise reduction, etc. The output unit may include an output transducer such as a loudspeaker/ receiver for providing an air-borne acoustic signal transcutaneously or percutaneously to the skull bone or a vibrator for providing a structure-borne or liquid-borne acoustic signal. In some hearing devices, the output unit may include one or more output electrodes for providing the electric signals such as in a Cochlear Implant.

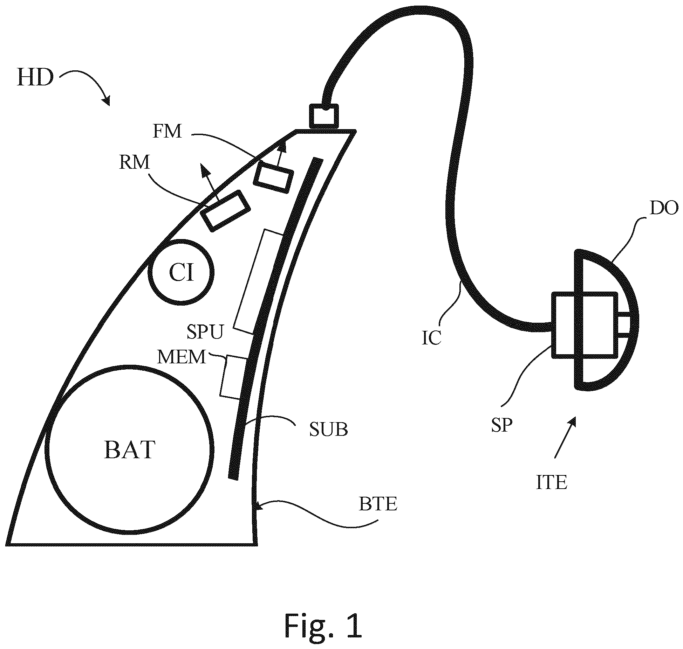

Fig. 1, schematically illustrates a hearing device HD, where the hearing device is shaped as a hearing aid of the behind-the-ear hearing aid. As disclosed herein, the hearing devie may be provided in other form-factors and without hearing loss compensation, i.e. as a earphone e.g. for music and/or phone conversation as a wireless headset. The hearing device HD comprises an interconnection member IC connecting a behind-the-ear housing BTE with an in-the-ear housing ITE. Two microphones constitute an input system for the hearing device, which are connected to a processor SPU and a memory MEM arranged in connection with a substrate SUB. A battery BAT powers the hearing device. Here the battery BAT is a secondary battery, i.e. rechargeable.

The hearing device HD comprises a charge interface CI configured to receive power from an external source and provide this as charging power to the battery during a recharging process. The charge interface CI may be a wired interface and/or a wireless interface. A wired part of such a charge interface may include one or more, such as two, pins which are configured to connect to corresponding pads in a charger device. A wireless part of a charge interface may include one or more coils configured to receive a wireless charge field emitted by a charger device having a charge coil. The charge interface CI may be connected through a converter in order to charge the battery BAT.

The hearing device HD may comprise an RF antenna in connection with a suitable wireless interface, such as a radio configured to communicate using a data protocol, such as Bluetooth/Bluetooth Low Energy or the like. The hearing device HD may comprise an inductive communication interface with a coil, wherein the inductive communication interface is configured to communicate with a hearing device to be placed at the contralateral ear of a user. The inductive communication interface may be configured to communicate with other devices than another hearing device. The coil for the inductive communication interface may be the same coil as the charger interface coil used to pick up wireless charge energy.

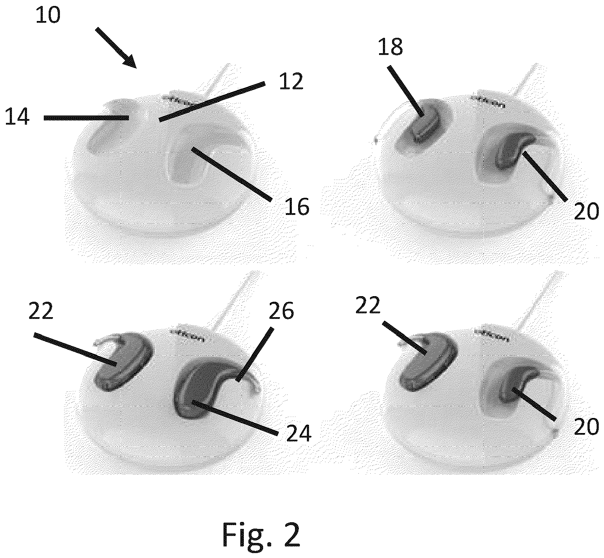

Fig. 2 schematically illustrates a charger device 10 having a housing. In the top part, or upper surface part, of the housing 12 a reception area 14 is configured to receive a hearing device 16. Here two such reception areas 14 and 16 are formed so that the charger device 10 is able to charge two devices simultaneously. A situation with two hearing devices 18 and 20 being placed in a respective reception area 14 and 16 is illustrated at the upper right-hand part of Fig. 2.

The charger device 10 comprises a charge supply configured to provide a charge current to the hearing device being charged. In the charger device 10, the reception area 14, 16 comprises a first retention area configured to engage with a first part of the hearing aid 18, 20. The retention area is configured so that it guides the hearing aid to have a specific orientation relative to the reception area. As illustrated in Fig. 2, the retention area engages a hook area of the hearing aid 18, 20, i.e. the area or part where a tube or wire connects the behind-the-ear housing with the in-the-ear housing (not illustrated in Fig. 2).

As illustrated in Fig. 2, the reception area may be larger and/or differently shaped compared to the housing of the hearing device/hearing aid. In the upper right-hand part of Fig. 2, the housings of the hearing aids 18, 20 are (significantly) smaller than the reception area, but owing to the retention area/part 26, the hearing aid housing is held in an orientation that ensure that the hearing aid may be charged in a near-optimal manner.

Here it is shown that the hearing device housing is lying on one side in the reception area, other orientations may be envisioned, but currently this orientation is considered advantageous. The side-wise orientation provides a visual cue to the user placing the device to be charged at the reception area that the hearing device is placed correctly or at least near correctly/optimally.

In the lower, left-hand side of Fig. 2, two hearing devices 22, 24 having larger housings are placed in the reception areas 14, 16. Here the housing of the respective hearing device 22, 24 fits more closely to the reception area geometry and size. In the lower, right-hand side of Fig. 2 a larger 22 and smaller 20 hearing device is positioned in the reception areas 14, 16. This illustrates that a user may have hearing devices of different sizes and/or shapes while still being able to charge them with the same charger device, thus lowing the need for providing a range of different/customized charger devices for users, which also have a positive impact on the environment by lowing the need for producing a large number of different types of charger device, also the user does not need to be equipped with two charger devices but can make by with just one despite having two differently shaped hearing devices.

As illustrated, each of the retention areas comprises a protrusion and/or a groove 26 configured to mechanically engage the first part of the hearing device 24. Thus, the groove is configured to engage with a part of the device to be charged so as to hold the device in a desired orientation. This alignment/retention may be further enhanced by a magnet which may be arranged in the charger device at/below the reception area and configured to provide a magnetic field that intercept a magnetizable component in said hearing aid. In this manner it is possible to establish two contact points for the hearing device to be charged and enhance the chance of the hearing device is maintained in the desired orientation relative to the charger device while being charged.

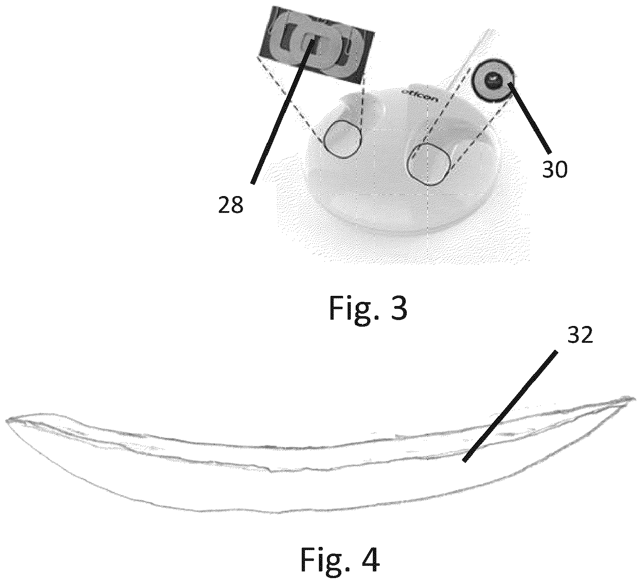

As illustrated in Fig. 3, the charger device may, at the reception area, comprise one 30 or more 28 wireless charge coils arranged to provide wireless charge energy to a device under charge. The coil or coils may be shaped so as to cover an area wherein a charge interface of a hearing device will most likely be placed. When using more than one charge coil 28, it is possible to provide a charge field which is a combination of fields from the number of charge coils. The charge coils may be provided as an array. When using more than one charge coil, it is also possible to adapt the number of coils used during a specific charging operation. This could be selectively only using a single coil, e.g. choosing the coil having the best charge transfer to a charge interface of a hearing device.

The charger device may be configured to communicate with the device being charged. This could be achieved as in-band communication over a charge channel, such as a signal overlaid on the charge signal. Communication could be achieved as intermittent with the charge, e.g. a first period charging the device and a second period for communication. This could help ensure that the receiving device have power to respond to e.g. interrogations relating to battery status. A separate communication channel could be established between the charger device and the device or devices being charged. This could be a wired or wireless channel, e.g. via an electrical connection of one or more pins of the hearing device or as a Bluetooth based channel, such as Bluetooth low energy, or an inductive communication channel.

Fig. 4 schematically illustrates the reception area comprising a bowl-shaped section. If the charger has a reception area wherein an upper surface is rounded in a bowl-shaped manner, where the center of the bowl is lower than the surrounding edge, a device placed on/in the charger device will, because of gravity forces, slide towards the center of the bowl and therefore by itself be centered if the user unintentionally places the device outside the optimum central area. This could be combined with one or more permanent magnets that could exert a pull force on the device drawing the device nearer an optimal orientation/placement in the bowl.

A bowl-shaped retention area is considered useful when charging small devices where a big planar coil is not practical, thus it may become important to place the device in an area having predictable electromagnetic field properties, such as in/near the middle of a charge coil.

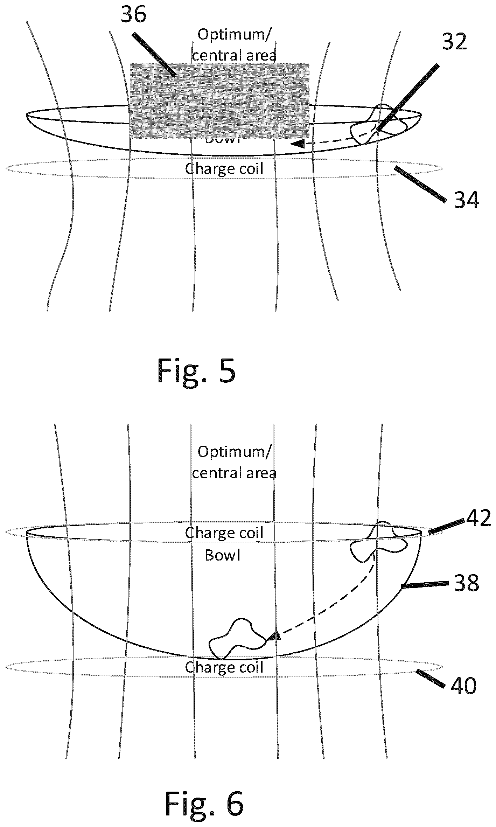

Fig. 5 further illustrated the principle of a hearing device 32 sliding along the side of a bowl-shaped reception area, as indicated by the dashed arrow, where a charge coil 34 is arranged beneath the bowl-shaped recaption area. As indicated there is an area, or volume, 36 wherein charging is more efficient or even optimal compared to a position further away from the center of the charge coil.

Fig. 6 further illustrated that it could be beneficial to provide a bowl-shaped reception area having an elongated z-axis, i.e. a higher sidewall 38 of the bowl/deeper bowl.

A single (often planar) charger coil will have a certain useable/optimum area in the charge field. If the charge coil is elongated/raised in the form of e.g. a cylinder, the size of the useable/optimum field volume will be larger. This effect could be achieved using two coils 40 and 42 as illustrated in Fig. 6.

A charger device could comprise a first coil arranged below (at a bottom part) of a reception area and a second coil at a top part of the reception area thereby establishing a charge volume at least between the first and second coil.

As shown in Fig. 6, two (Helmholz) or more coils may be arranged so as to effectively forming a longer coil that in turn extends the optimum field area. Here a second coil is placed at a top part of the reception area in addition to the coil arranged below the bowl-shaped reception area. The principle may be used with other geometries of reception areas, e.g. in connection with the reception areas illustrated in Figs. 1 and 2. The charger device illustrated in Fig. 6 thus place the coil in a cylindrical or helical configuration, and at least part of the reception area then arranged in a volume inside the cylinder or helix.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects. Reference to an element in the singular is not intended to mean "one and only one" unless specifically so stated, but rather "one or more." Unless specifically stated otherwise, the term "some" refers to one or more.

Accordingly, the scope should be judged in terms of the claims that follow.

## Claims

1. A charging device configured to receive a hearing device, wherein the hearing device has a hearing device housing having a side surface, the hearing device being an ear level device, such as hearing aid or an earbud, the charging device comprising:
a housing having a reception area configured to receive a hearing device,
wherein the reception area is configured so that the hearing device will be lying with the side surface in contact with the reception area during charging,
a charge supply configured to provide a charge current to the hearing device,
the reception area comprising a first retention area configured to engage with a first part of the hearing device which then guide the hearing device to have a specific orientation relative to the reception area.

2. The charger device according to claim 1, wherein the first retention area comprises a protrusion and/or a groove configured to mechanically engage said first part of the hearing device.

3. The charger device according to claim 1 or 2, further comprising a magnet arranged at the reception area and configured to provide a magnetic field that intercept a magnetizable component in said hearing device.

4. The charger device according to any one of claims 1-3, wherein said first part of the hearing device is at least one of: a sound hook, a wire, a tube.

5. The charger device according to any one of claims 1-4, wherein said charge supply is provided to the hearing device as a wireless charge signal, and said charge supply comprises at least one coil arranged at said reception area.

6. The charger device according to claim 5, wherein said coil is arranged in a cylindrical or helical shape, and wherein at least part of the reception area is arranged in a volume inside the cylinder or helix.

7. The charger device according to any one of claims 1-6, wherein the reception area comprises a bowl-shaped section.

8. The charger device according to any one of claims 1-7, wherein charge supply comprises a first coil arranged at a lower part of the reception area, and the charge supply further comprises a second coil arranged at a top part of the reception area.

9. The charger device according to any one of claims 1-8, wherein the charger device is configured to determine that the hearing device is in a position to be charged, and that the charger device comprises an output transducer configured to provide haptic feedback upon determination that the hearing device is in the position to be charged.

10. The charger device according to any one of claims 1-9, further comprising a communication interface configured to communicate with a device being positioned at the reception area, wherein the communication is wired or wireless.

11. The charger device according to claim 10, wherein the communication interface is configured to communicate interleaved with charging the device or the communication interface is configured to communicate using a channel different from a charging channel.

12. The charger device according to any one of claims 1-10, further comprising a communication interface configured to communicate with an external computer device so as to receive instructions from said external computer device.

13. The charger according to claim 12, wherein the external computer device is a smartphone or a personal computer or a server device.
